# EUROPEAN PATENT APPLICATION

(11) **EP 3 492 502 A1**
(43) Date of publication of application: **05.06.2019**
(21) Application number: 17834456.0
(22) Date of filing: 27.07.2017
(51) Int. Cl.: C08G 18/32, B65G 15/32, C08G 18/10, C08G 18/66, C08G 18/76, F16G 1/14, F16G 1/28

(54) **THERMOSETTING POLYURETHANE COMPOSITION AND USE THEREOF**

(30) Priority: 29.07.2016 JP 2016149891; 25.07.2017 JP 2017143475
(71) Applicant: Mitsuboshi Belting Ltd., Kobe-shi, Hyogo 653-0024 (JP)
(72) Inventor: ARIMACHI Kentaro, Kobe-shi Hyogo 653-0024 (JP); IIZUKA Shingo, Kobe-shi Hyogo 653-0024 (JP); TAKENAKA Akira, Kobe-shi Hyogo 653-0024 (JP); OKAZAWA Takahide, Kobe-shi Hyogo 653-0024 (JP)
(74) Representative: Hoffmann Eitle
(86) International application number: PCT/JP2017/027175
(87) International publication number: WO 2018/021454

(57) **Abstract**

The present invention relates to a thermosetting polyurethane composition for making a belt used in the environment where the belt makes contact with oils containing unsaturated fatty acids and with a metal, the thermosetting polyurethane composition containing (A) an isocyanate group-terminated urethane prepolymer having polyester units and/or polycarbonate units, (B) a hydrolysis inhibitor, and (C) a curing agent.

## Description

### Technical Field

The present invention relates to a thermosetting polyurethane composition capable of forming a cured object which, even when used in an environment where an oil including an unsaturated fatty acid is scattered and there can be a contact with a metal, e.g., a metal powder, shows excellent resistance to the oil and metal. The present invention further relates to a molded object (e.g., a transmission belt such as a toothed belt) constituted of a cured object obtained from the composition, and to a method of using the molded object.

### Background Art

Molded objects of a thermosetting polyurethane including, as a main component, a polyether type polyurethane (urethane elastomer) formed from poly(tetramethylene ether glycol) are in extensive use as industrial components or OA appliance components, e.g., rolls, and in coin-conveying devices, etc., because these molded objects are excellent in terms of wear resistance, mechanical property, dynamic property, and ozone resistance. Polyether type polyurethanes are known to be generally less apt to decompose because of the ether bonds and urethane bonds in the molecule.

However, in limited special environments (as in the restaurant industry), such a molded polyurethane object arouses a trouble that the polyurethane absorbs an oil including an unsaturated fatty acid, e.g., oleic acid, which has been scatted from the vicinity and come into contact therewith or which has indirectly come into contact therewith, and this molded polyurethane object deteriorates early due to the influence of the oil absorption.

For example, a transmission belt (toothed belt) including a molded object of a thermosetting polyurethane as a main body is used as a coin-conveying belt in a coin conveying/sorting mechanism in automatic change makers utilized in cash registers. Especially in the automatic change makers used in cash registers in the restraint industry, the deterioration poses a serious problem. The mechanism of the deterioration is presumed to be as follows: in cases where a polyurethane which has absorbed an oil including an unsaturated fatty acid comes into contact with coins (or a coin-derived metal powder), the unsaturated fatty acid is converted to radicals by the catalysis of an ionized metal (transition metal ions) to accelerate molecular-chain scission in the polyurethane (because of the progress of a redox reaction which considerably accelerates an autoxidation reaction of urethane molecular chains), resulting in the early deterioration of the molded polyurethane object (coin-conveying belt). Furthermore, it seems that in an atmosphere filled with a volatilized acidic condiment or in an environment where there is a contact with chlorine remaining in tap water, the ionization of a metal powder is considerably accelerated and the deterioration, the mechanism of which was described above, is accelerated thereby. In fact, there are cases where molded polyurethane objects have deteriorated in a half year after initiation of use. There is no known effective measure for mitigating the early deterioration occurring in such a special use environment.

JP-A-7-186296 (Patent Document 1) discloses a transmission-belt urethane composition including a thermosetting polyurethane and, incorporated thereinto, an organic carboxylic acid and a phenolic antioxidant and/or a non-contaminative amine-compound antioxidant. This document states that the transmission belt formed from the thermosetting polyurethane to which an organic carboxylic acid has been added in order to accelerate the hardening can be inhibited, by incorporating the phenolic antioxidant and/or non-contaminative amine-compound antioxidant, from suffering a deterioration due to copper when in contact with pulleys of brass, which is a copper-containing metal. In Examples given in this document, a polyurethane obtained from a prepolymer obtained from both poly(tetramethylene ether glycol) or poly(ethylene adipate) and toluene diisocyanate was used as the thermosetting polyurethane and azelaic acid was used as the organic carboxylic acid.

However, in this document, the organic carboxylic acid is incorporated as an additive and the external absorption of an unsaturated fatty acid is not supposed. There is no mention therein of coin conveying. Furthermore, polyether type polyurethanes are prone to absorb oils probably because of the small values of SP (cohesive energy) thereof and the high affinity thereof for oils. Meanwhile, polyester type polyurethanes are prone to be hydro lyzed.

JP-A-2003-322218 (Patent Document 2) discloses a belt formed from a polyurethane resin composition containing carbon nanotubes, as a power transmission belt or a belt for conveying coins. This document states that the conveying belt for conveying coins or the like can be inhibited from being deteriorated by metals, by further incorporating a metal deactivator, such as a hydrazine compound having a hindered phenol structure, into the polyurethane resin composition. The polyurethane resin composition may contain an acid catalyst, e.g., an organic carboxylic acid, and short fibers impregnated with a fat or oil, and an acid catalyst and palm oil were incorporated in Examples. Although various kinds of polyether type and polyester type polyurethanes are shown as examples of the polyurethane, the polyurethanes used in the Examples are unspecified.

However, in this document also, an organic carboxylic acid and a fat or oil are incorporated as additives. The external absorption of unsaturated fatty acids is not supposed, and there is no mention therein of any relationship between an organic carboxylic acid or a fat or oil and a metal.

JP-A-5-43645 (Patent Document 3) discloses an oil-resistant belt usable at high temperatures in an oily environment, for example, in metal cutting machines. This oil-resistant belt includes a p-phenylene diisocyanate, a hydroxyl-terminated polyester polyol, and 4,4'-methylenebis(o-chloroaniline) as main components, the polyol having a number-average molecular weight of 1,600 to 3,500.

However, this document contains no mention of any relationship between a metal and the polyurethane. Although a hydrolysis inhibitor is shown as an example of stabilizers in this document, the stabilizer was not used in the Examples.

JP-A-2006-170301 (Patent Document 4) discloses a belt of a polyester type urethane containing a silicone oil and a carbodiimide compound, as a toothed urethane belt which is for use in applications where coins, bills, cards, or the like is conveyed and which has excellent water resistance. In Examples of this document, a belt slab was produced from a composition including a urethane prepolymer obtained from caprolactonediol and tolylene diisocyanate, a silicone oil, an aromatic polycarbodiimide, and a hardener.

However, this document is intended to improve water resistance, and any relationship between an oil and the polyurethane is not supposed therein. There is no mention therein of any relationship between a metal and the polyurethane.

### Prior Art Documents

### Patent Documents

Patent Document 1: JP-A-7-186296
Patent Document 2: JP-A-2003-322218
Patent Document 3: JP-A-5-43645
Patent Document 4: JP-A-2006-170301

### Summary of the Invention

### Problems that the Invention is to Solve

An object of the present invention is to provide: a thermosetting polyurethane composition which can give molded objects that are inhibited from deteriorating even when used in environments where there is a contact with an oil including an unsaturated fatty acid and with a metal, e.g., a metal powder; a molded object constituted of a cured object obtained from the composition; and a method of using the molded object.

Another object of the present invention is to provide a thermosetting polyurethane composition effective in inhibiting the absorption of an oil including an unsaturated fatty acid, a molded object constituted of a cured object obtained from the composition, and a method of using the molded object.

Still another object of the present invention is to provide a thermosetting polyurethane composition effective in improving hydrolytic resistance, a molded object constituted of a cured object obtained from the composition, and a method of using the molded object.

### Means for Solving the Problems

The present inventors diligently made investigations in order to overcome the problems and, as a result, have discovered that a molded object constituted of a cured object obtained from a thermosetting urethane composition including an isocyanate-group-terminated urethane prepolymer (A) having a polyester unit and/or a polycarbonate unit, a hydrolysis inhibitor (B), and a hardener (C) can be inhibited from deteriorating even when used in an environment where the molded object comes into contact with an oil including an unsaturated fatty acid and with a metal, e.g., a metal powder. The present invention has been thus completed.

That is, the thermosetting polyurethane composition of the present invention is a thermosetting polyurethane composition which is for forming a belt to be used in an environment where the belt comes into contact with an oil including an unsaturated fatty acid and with a metal, and which includes an isocyanate-group-terminated urethane prepolymer (A) having a polyester unit and/or a polycarbonate unit, a hydrolysis inhibitor (B), and a hardener (C). The isocyanate-group-terminated urethane prepolymer (A) may be a reaction product obtained by reacting a lactone-based polyester polyol and/or a polycarbonate polyol with an aromatic polyisocyanate (in particular, a reaction product obtained by reacting a polycarbonate polyol with p-phenylene diisocyanate). The hydrolysis inhibitor (B) may be a carbodiimide compound. The proportion of the hydrolysis inhibitor (B) is preferably about 0.1 to 10 parts by mass per 100 parts by mass of the isocyanate-group-terminated urethane prepolymer (A). The hardener (C) may be an alkanediol.

The present invention further involves a molded object which has a surface that comes into contact with an oil including an unsaturated fatty acid and with a metal, wherein a part or all of the surface is constituted of a cured object obtained from the thermosetting polyurethane composition. This molded object may be a toothed belt for conveying coins. The present invention furthermore involves a method of using the toothed belt for conveying coins, wherein the toothed belt is used in an environment where the toothed belt comes into contact with an oil including an unsaturated fatty acid and with a metal.

In this description and the claims, the term "oil including an unsaturated fatty acid" means: unsaturated fatty acids alone; a mixture of unsaturated fatty acids with other oils such as, for example, fatty acids; and a fat or oil having the framework of an unsaturated fatty acid.

### Effects of the Invention

Since the molded object according to the present invention is constituted of a cured object obtained from a thermosetting polyurethane composition including an isocyanate-group-terminated urethane prepolymer (A) having a polyester unit and/or a polycarbonate unit, a hydrolysis inhibitor (B), and a hardener (C), this molded object can be inhibited from deteriorating even when used in an environment where the molded object comes into contact with an oil including an unsaturated fatty acid and with a metal, e.g., a metal powder. This molded object can be inhibited from absorbing oils including unsaturated fatty acids. Furthermore, in the case where a reaction product obtained by reacting a lactone-based polyester polyol and/or a polycarbonate polyol with an aromatic polyisocyanate was used, the molded object can further have improved hydrolytic resistance.

### Brief Description of the Drawing

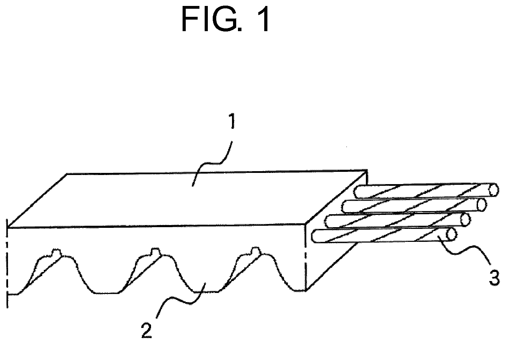

FIG. 1 is a partial diagrammatic perspective view showing an example of the toothed belt of the present invention.

### Modes for Carrying Out the Invention

### [Thermosetting Polyurethane Composition]

The thermosetting polyurethane composition of the present invention is for forming a belt to be used in an environment where the belt comes into contact with an oil including an unsaturated fatty acid and with a metal, e.g., a metal powder, and includes an isocyanate-group-terminated urethane prepolymer (A), a hydrolysis inhibitor (B), and a hardener (C).

### (A) Isocyanate-group-terminated Urethane Prepolymer

The isocyanate-group-terminated urethane prepolymer (A) includes a polyester unit and/or a polycarbonate unit for inhibiting the cured object (molded object) obtained from the polyurethane composition from absorbing an oil including an unsaturated fatty acid. The urethane prepolymer including these units has relatively high intermolecular cohesive energy (SP value or polarity) and a low affinity for unsaturated fatty acids and can hence inhibit the molded object from absorbing an oil including an unsaturated fatty acid.

The isocyanate-group-terminated urethane prepolymer (A) is a prepolymer usually having two or more isocyanate groups at the terminals, and may be an isocyanate-group-terminated urethane prepolymer obtained by reacting a polyol with an excess of a polyisocyanate.

The polyester unit and/or polycarbonate unit may usually be contained as a polyester polyol and/or a polycarbonate polyol in the polyols.

The polyester polyol may be any of: a reaction product obtained by reacting a dicarboxylic acid (or anhydride thereof) with a diol; a reaction product (lactone-based polyester polyol) obtained by subjecting a lactone to ring-opening polymerization with an initiator; and a reaction product obtained by reacting a dicarboxylic acid and/or diol with a lactone.

Examples of the dicarboxylic acid include dicarboxylic acids [e.g., aromatic dicarboxylic acids or anhydrides thereof (such as terephthalic acid, isophthalic acid, and phthalic anhydride), alicyclic dicarboxylic acids or anhydrides thereof (such as tetrahydrophthalic anhydride and HET anhydride), and aliphatic dicarboxylic acids or anhydrides thereof (such as C₄₋₂₀ alkanedicarboxylic acids including succinic acid (anhydride), adipic acid, and sebacic acid)] and alkyl esters of these dicarboxylic acids. One of these dicarboxylic acids may be used alone, or two or more thereof may be used in combination. Preferred of these dicarboxylic acids are aliphatic dicarboxylic acids or anhydrides thereof (such as C₆₋₂₀ alkanedicarboxylic acids including adipic acid, azelaic acid, and sebacic acid).

Examples of the diol include diols such as aliphatic diols [e.g., alkanediols (C₂₋₂₂ alkanediols such as ethylene glycol, propylene glycol, trimethylene glycol, 1,4-butanediol, 1,5-pentanediol, neopentyl glycol, and 1,6-hexanediol)], alicyclic diols (e.g., cycloaklanediols such as 1,4-cyclohexanediol and 1,4-cyclohexanedimethanol, hydrogenated bisphenols such as hydrogenated bisphenol A, and C₂₋₄ alkylene oxide adducts of these), and aromatic diols (e.g., araliphatic diols such as xylylene glycol, bisphenols such as bisphenol A, bisphenol S, and bisphenol F, and C₂₋₄ alkylene oxide adducts of these). One of these diols can be used alone, or two or more thereof can be used in combination. Preferred of these diols, from the standpoints of stability, etc., are the aliphatic diols and the alicyclic diols. Especially preferred are C₆₋₂₀ alkanediols such as 1,6-hexanediol.

Examples of the lactone include C₃₋₁₀ lactones such as butyrolactone, valerolactone, caprolactone, and enantholactone. One of these lactones can be used alone, or two or more thereof can be used in combination. Preferred of these lactones are C₅₋₁₀ lactones such as valerolactone, caprolactone, and enantholactone. Especially preferred are C₆₋₈ lactones such as caprolactone.

Examples of the initiator for the lactone include water, homo- or copolymers of oxirane compounds (e.g., polyethylene glycol and polytetramethylene ether glycol, low-molecular-weight polyols (e.g., alkanediols such as ethylene glycol, trimethylolpropane, glycerin, pentaerythritol, and bisphenol A), and compounds having an amino group (e.g., diamine compounds such as ethylenediamine, hexamethylenediamine, hydrazine, xylylenediamine, and isophoronediamine). One of these initiators can be used alone, or two or more thereof can be used in combination.

Examples of the polycarbonate polyol include polymers of a glycol (selected from among: alkanediols such as ethylene glycol and 1,4-butanediol; (poly)oxyalkylene glycols such as diethylene glycol; alicyclic diols such as 1,4-cyclohexanediol, 1,4-cyclohexanedimethanol, and hydrogenated bisphenol A; and aromatic diols such as bisphenols including bisphenol A and alkylene oxide adducts of bisphenols) with a carbonate (e.g., a di(C₁₋₄ alkyl) carbonate such as dimethyl carbonate or diethyl carbonate, a cyclic carbonate such as ethylene carbonate, or a di(C₆₋₁₂ aryl) carbonate such as diphenyl carbonate) or with phosgene, etc. One of these polycarbonate polyols can be used alone, or two or more thereof can be used in combination.

Preferred of these polyols are the lactone-based polyester polyols (preferably polyester polyols based on a C₅₋₁₀ lactone, more preferably polyester polyols based on a C₆₋₈ lactone such as caprolactone) and the polycarbonate polyols from the standpoint of enabling the composition to give a molded object which is low in the property of absorbing oils including an unsaturated fatty acid and which, even when in contact with an oil including an unsaturated fatty acid and with a metal, e.g., a metal powder, is inhibited from decomposing. Especially preferred are the polycarbonate polyols from the standpoint that the molded object can have improved hydrolytic resistance.

The polyol may contain another polyol, e.g., a polyether polyol, a polyetherester polyol, or a (meth)acrylic polymer polyol, so long as the inclusion thereof does not lessen the effects of the invention.

Examples of the polyisocyanate include aliphatic polyisocyanates [aliphatic diisocyanates such as propylene diisocyanate, trimethylene diisocyanate, tetramethylene diisocyanate, hexamethylene diisocyanate (HDI), trimethylhexamethylene diisocyanate (TMDI), and lysine diisocyanate (LDI) and aliphatic triisocyanates such as (1,6,11-undecane triisocyanato)methyloctane and 1,3,6-hexamethylene triisocyanate], alicyclic polyisocyanates [e.g., alicyclic diisocyanates such as cyclohexane 1,4-diisocyanate, isophorone diisocyanate (IPDI), hydrogenated xylylene diisocyanate, and hydrogenated bis(isocyanatophenyl)methane and alicyclic triisocyanates such as bicycloheptane triisocyanate], and aromatic polyisocyanates [e.g., aromatic diisocyanates such as phenylene diisocyanates, tolylene diisocyanate (TDI), xylylene diisocyanate (XDI), tetramethylxylylene diisocyanate (TMXDI), naphthalene diisocyanate (NDI), bis(isocyanatophenyl)methane (MDI), toluidine diisocyanate (TODI), and 1,3-bis(isocyanotophenyl)propane].

One of these polyisocyanates can be used alone, or two or more thereof can be used in combination. From the standpoint of enabling the composition to give a molded object which has improved mechanical properties and is inhibited from decomposing even when in contact with an oil including an unsaturated fatty acid and with a metal, e.g., a metal powder, and which further has improved hydrolytic resistance, aromatic diisocyanates such as phenylene diisocyanates, TDI, and XDI are preferred among those polyisocyanates, and p-phenylene diisocyanate (PPDI) is especially preferred.

### (B) Hydrolysis Inhibitor

As the hydrolysis inhibitor (B), use can be made of a hydrolysis inhibitor which is in common use for polyesters or polycarbonates. For example, use can be made of carbodiimide compounds, epoxy compounds, isocyanate compounds, oxazoline compounds, and the like. One of these hydrolysis inhibitors can be used alone, or two or more thereof can be used in combination. Of these, carbodiimide compounds are preferred from the standpoint that these compounds are capable of imparting improved hydrolytic resistance to the molded object.

The carbodiimide compound is not particularly limited so long as the compound has a carbodiimide group (-N=C=N-) in the molecule. Examples thereof include aliphatic carbodiimide compounds, alicyclic carbodiimide compounds, and aromatic carbodiimide compounds. One of these carbodiimide compounds can be used alone, or two or more thereof can be used in combination. Aromatic carbodiimide compounds are preferred of these carbodiimide compounds from the standpoint that the aromatic carbodiimide compounds are capable of imparting improved hydrolytic resistance to the molded object.

Examples of the aromatic carbodiimide compounds include aromatic monocarbodiimide compounds such as: diarylcarbodiimides, e.g., diphenylcarbodiimide; bis(di(C₁₋₁₀ alkyl)phenyl)carbodiimides, e.g., bis(2,6-dimethylphenyl)carbodiimide, bis(2,6-diisopropylphenyl)carbodiimide, and bis(2,6-di-t-butylphenyl)carbodiimide; and bis(tri(C₁₋₁₀ alkyl)phenyl)carbodiimides, e.g., bis(2,4,6-triisopropylphenyl)carbodiimide. The aromatic carbodiimide compounds may be aromatic polycarbodiimides corresponding to these aromatic monocarbodiimides. One of these aromatic carbodiimide compounds can be used alone, or two or more thereof can be used in combination. Preferred of these aromatic carbodiimide compounds, from the standpoints of dispersibility in the urethane prepolymer (A), etc., are bis(di(C₂₋₆ alkyl)phenyl)carbodiimides such as bis(2,6-diisopropylphenyl)carbodiimide and bis(tri(C₂₋₆ alkyl)phenyl)carbodiimides such as bis(2,4,6-triisopropylphenyl)carbodiimide.

The hydrolysis inhibitor (B) may have a melting point at which the urethane prepolymer (A) can be melted without deteriorating. The melting point of the hydrolysis inhibitor (B) may be 80°C or lower (in particular, 60°C or lower). For example, the melting point thereof may be about 30 to 70°C, preferably about 35 to 65°C, more preferably about 40 to 60°C (in particular, 4555 to °C). By using the hydrolysis inhibitor (B) having such a melting point and by adding this hydrolysis inhibitor in a molten state to the urethane prepolymer and stirring the mixture, a thermosetting polyurethane composition can be prepared in which the hydrolysis inhibitor is evenly dispersed in the urethane prepolymer. In case where the melting point thereof is too high, it is difficult to evenly disperse the hydrolysis inhibitor in the urethane prepolymer (A) and this may result in a decrease in production efficiency.

The proportion of the hydrolysis inhibitor (B) is, for example, about 0.1 to 10 parts by mass, preferably about 0.5 to 8 parts by mass, more preferably about 1 to 5 parts by mass (in particular, 1.5 to 3 parts by mass), per 100 parts by mass of the urethane prepolymer (A). Too small proportion of the hydrolysis inhibitor (B) may result in a decrease in the hydro lytic resistance of the molded object, while too large proportion thereof may result in a decrease in the mechanical properties of the molded object.

### (C) Hardener

As the hardener (C), use can be made of a hardener in common use. Although a suitable one can be selected in accordance with the kind of the urethane prepolymer (A), polyols and polyamines are preferred from the standpoints of reactivity, etc.

Examples of the polyol include the polyester polyols, polycarbonate polyols, and diols which are shown above in the section Urethane Prepolymer (A), and further include triols such as glycerin and trimethylolpropane. One of these polyols can be used alone, or two or more thereof can be used in combination.

Examples of the polyamine include aliphatic diamines (e.g., ethylenediamine, propylenediamine, and tetramethylenediamine), alicyclic diamines (e.g., 1,4-cyclohexylenediamine and isophoronediamine), aromatic diamines (e.g., 4,4'-diaminodiphenylmethane, 3,3'-dichloro-4,4'-diaminodiphenylmethane (MOCA), and phenylenediamine), araliphatic diamines (e.g., m-xylylenediamine), and tri- to pentamines (e.g., diethylenetriamine, triethylenetetramine, and tetraethylenepentamine). One of these polyamines can be used alone, or two or more thereof can be used in combination.

Preferred of these hardeners are aromatic polyamines (in particular, aromatic diamines) such as MOCA and alkanediols such as ethylene glycol, propylene glycol, 1,4-butanediol, and 1,6-hexanediol, from the standpoint that these polyamines and alkanediols have high reactivity and can impart improved mechanical properties to the molded object. Especially preferred are C₂₋₆ alkanediols such as 1,4-butanediol.

The urethane prepolymer (A) and the hardener (C) are used in combination usually in such a ratio that the amount of the isocyanate group and that of the active hydrogen atom (for example, amino group or hydroxyl group) are approximately equivalent to each other [(isocyanate group)/(active hydrogen atom) = about 0.8/1 to 1.2/1]. The proportion of the hardener (C) can be selected from the range of, for example, about 1 to 50 parts by mass (in particular, 3 to 20 parts by mass) per 100 parts by mass of the urethane prepolymer (A). Especially in the case where the hardener (C) is an aromatic polyamine, the proportion of this hardener (C) is, for example, about 3 to 50 parts by mass, preferably about 5 to 30 parts by mass, more preferably about 10 to 20 parts by mass, per 100 parts by mass of the urethane prepolymer (A). In the case where the hardener (C) is an alkanediol, the proportion of this hardener (C) is, for example, about 1 to 30 parts by mass, preferably about 2 to 10 parts by mass, more preferably about 3 to 5 parts by mass, per 100 parts by mass of the urethane prepolymer (A).

### (D) Plasticizer

The thermosetting polyurethane composition of the invention may further contain a plasticizer (D) for improving the flexibility of the molded object. Examples of the plasticizer include plasticizers in common use, such as phosphoric acid esters, aromatic carboxylic acid esters, and fatty acid esters. One of these plasticizers can be used alone, or two or more thereof can be used in combination. Of these plasticizers, aromatic carboxylic acid esters are generally used.

Examples of the aromatic carboxylic acid ester include phthalic acid di(C₁₋₁₂ alkyl) esters such as dimethyl phthalate (DMP), diethyl phthalate (DEP), dibutyl phthalate (DBP), dihexyl phthalate, dioctyl phthalate (DOP), and di-2-ethylhexyl phthalate (DEHP). One of these aromatic carboxylic acid esters can be used alone, or two or more thereof can be used in combination. Preferred of these aromatic carboxylic acid esters are phthalic acid di(C₆₋₁₀ alkyl) esters such as DOP.

The proportion of the plasticizer (D) is, for example, about 1 to 50 parts by mass, preferably about 2 to 30 parts mass, more preferably about 3 to 20 parts by mass (in particular, 5 to 15 parts by mass), per 100 parts by mass of the urethane prepolymer (A). Too small proportion of the plasticizer (D) may produce no effect of improving the flexibility, while too large proportion thereof may result in a decrease in the mechanical properties of the molded object.

### (E) Other Additives

The thermosetting polyurethane composition of the invention may contain additives in common use, such as stabilizers (e.g., weatherability improvers, antioxidants, heat stabilizers, and light stabilizers), fillers, lubricants, colorants, and solvents. One of these additives can be used alone, or two or more thereof can be used in combination. The proportion of such other additives is, for example, about 30 parts by mass or less, preferably about 1 to 20 parts by mass, more preferably about 3 to 15 parts by mass, per 100 parts by mass of the urethane prepolymer.

The thermosetting polyurethane composition of the invention is not particularly limited in methods for preparing the composition, and a method in common use can be utilized. For example, use may be made of a method in which the urethane prepolymer (A) is mixed with the hydrolysis inhibitor (B) (optionally further with the plasticizer (D) and/or other additives (E)) to prepare a main-ingredient liquid and thereafter the hardener (C) is added to the main-ingredient liquid.

### [Structure of the Toothed Belt for Conveying Coins and Process for Production thereof]

The molded object of the invention is for use in an environment where the molded object comes into contact with an oil including an unsaturated fatty acid and with a metal, e.g., a metal powder, and this molded object has a surface that comes into contact with the oil including an unsaturated fatty acid and with the metal, e.g., metal powder, a part or all of the surface being constituted of a cured object obtained from the thermosetting polyurethane composition. The areal proportion in which the cured object of the thermosetting polyurethane composition occupies the metal-contact surface can be suitably selected in accordance with the kind of the molded object. However, the areal proportion may be, for example, 50% or larger, preferably 80% or larger, more preferably 90% or larger. The molded object of the invention preferably is a toothed belt for conveying coins (in particular, the coin-conveying belt of an automatic change maker for use in cash registers in the restaurant industry), which is frequently used in such environments. Examples of the oil including an unsaturated fatty acid which frequently come into contact with coin-conveying belts in that environment include: C₁₂₋₂₄ unsaturated fatty acids (in particular, C₁₄₋₂₂ unsaturated fatty acids) such as oleic acid, linolic acid, and linolenic acid; and fats and oils, such as rapeseed oil, tsubaki oil, and linseed oil. Examples of metals which frequently come into contact with coin-conveying belts include copper, zinc, nickel, aluminum, and alloys thereof (in particular, copper alloys).

The toothed belt for conveying coins of the invention may be a toothed belt which includes a belt body that has a plurality of teeth for gearing with pulleys, the teeth formed in at least one surface of the belt body at given intervals along the longitudinal direction of the belt. The belt body of the toothed belt of the invention includes, embedded therein, a tension member (usually, cords arranged along the width direction of the belt and spirally wound) extending in the longitudinal direction of the belt, from the standpoints of running stability, belt strength, etc. The toothed belt of the invention may be further equipped with a reinforcing layer constituted of a fabric or the like.

In the toothed belt of the invention, at least a part or all of at least the surface thereof which comes into contact with an oil including an unsaturated fatty acid and with a metal, e.g., a metal powder, should be constituted of a cured object obtained from the thermosetting polyurethane composition. For example, the toothed belt may be wholly constituted of a cured object of the thermosetting polyurethane composition. In the case where the toothed belt has a multilayer structure made up of superposed layers, only the layer (e.g., the back face of the belt) which comes into contact with an oil including an unsaturated fatty acid and with a metal, e.g., a metal powder, may be formed from the thermosetting polyurethane composition.

FIG. 1 is a partial diagrammatic perspective view showing an example of the toothed belt of the invention. The toothed belt shown in this figure has a plurality of teeth 2 formed in one surface of the belt body 1 at given intervals along the longitudinal direction of the belt, the teeth 2 having a trapezoidal longitudinal-direction cross-sectional shape. The belt body 1 includes a plurality of coed 3 extending in the longitudinal direction of the belt and embedded in the belt body 1 at given intervals along the width direction of the belt.

The shape of the toothed belt is not limited to that shown in FIG. 1. The toothed belt may have any shape so long as the toothed belt has a plurality of teeth or protrusions formed in at least one surface of the belt body at given intervals along the longitudinal direction of the belt so as to fit to toothed pulleys. The cross-sectional shape of the protrusions (shape of the cross-section along the longitudinal direction or width direction of the belt) is not limited to the trapezoid, and may be an appropriate shape according to the configuration of the toothed pulleys. Examples thereof include circular, elliptic, and polygonal (triangular, quadrilateral (e.g., rectangular), etc.) shapes. The distance between adjacent protrusions is, for example, about 1 to 10 mm, preferably about 2 to 8 mm, in accordance with the configuration of the toothed pulleys, etc.

In the case where the toothed belt has the multilayer structure, the belt body may be constituted of a polyurethane which is the same as or different from that of the layer including a portion that comes into contact with pulleys. Alternatively, the belt body may be constituted of a rubber component in common use, such as, for example, a diene rubber, olefin rubber, acrylic rubber, fluororubber, silicone rubber, urethane rubber, epichlorohydrin rubber, or combination of two or more of these rubbers.

As the cords (tension member), use can usually be made of multifilament-yarn twisted cords (e.g., piled twisting, single twisting, or Lang lay cords). The cords each have an average diameter (diameter of the twisted cord) of, for example, about 0.1 to 2 mm, preferably about 0.15 to 0.8 mm, more preferably about 0.2 to 0.4 mm.

The cords may be embedded at given intervals (or at constant intervals) along the width direction of the belt. The distance between adjacent coeds (distance between the centers of adjacent core wires) may be, for example, about 0.2 to 1.5 mm, preferably about 0.3 to 0.7 mm, in accordance with the diameter of the cords.

The fiber constituting the cords is not particularly limited. Generally used from the standpoints of low elongation and high strength are, for example, synthetic fibers such as polyester fibers, polyamide fibers, and aramid fibers and inorganic fibers such as glass fibers and carbon fibers.

Processes for producing the toothed belt of the invention are not particularly limited, and a process in common use can be utilized. For example, the toothed belt may be produced using a mold including a combination of an inner die, which has a peripheral surface where a plurality of grooves corresponding to a tooth form extend along the axial direction, and a cylindrical outer die. The specific procedure is as follows. A tension member is wound around the inner die, which is then inserted into the outer die. This mold is preheated to about 80 to 120°C (e.g., 90 to 110°C), and the polyurethane composition is filled into the space between the inner die and the outer die. The mold assembly containing the polyurethane composition is heated to about 100 to 130°C (e.g., 110 to 120°C) while being rotated at about 3,000 to 5,000 rpm (e.g., 3,500 to 4,500 rpm), thereby curing the polyurethane composition to obtain a belt sleeve. The belt sleeve obtained is cut in round slices having a given width. Thus, the toothed belt of the invention is obtained.

### Examples

The present invention is explained below in more detail by reference to Examples, but the invention should not be limited by these Examples. Details of the raw materials used in the Examples and Comparative Examples are as follows. The toothed belts obtained in the Examples and Comparative Examples were evaluated with respect to the following items by the methods shown below.

### [Raw Materials used]

Polyester type prepolymer A: copolymer of a polyester diol (poly(hexamethylene adipate)) with tolylene diisocyanate (TDI); "Vibrathane 8050", manufactured by Chemtura Corp.
Polyester type prepolymer B: copolymer of a polyester diol (adipate/lactone copolymer) with tolylene diisocyanate (TDI); "Pandex 305E", manufactured by DIC Inc.
Polyester type prepolymer C: copolymer of a polyester diol (polycaprolactone diol) with tolylene diisocyanate (TDI); "Pandex 101EH", manufactured by DIC Inc.
Polyester type prepolymer D: copolymer of a polyester diol (polycaprolactone diol) with p-phenylene diisocyanate (PPDI); "Adiprene LFP2950A", manufactured by Chemtura Corp.
Polycarbonate type prepolymer E: copolymer of a polycarbonate diol with p-phenylene diisocyanate (PPDI); "Adiprene LFP3940A", manufactured by Chemtura Corp.
Polyether type prepolymer F: copolymer of a polyether diol (poly(tetramethylene ether glycol)) with tolylene diisocyanate (TDI); "Adiprene L-100", manufactured by Chemtura Corp.
Plasticizer: dioctyl phthalate (DOP)
Hydrolysis inhibitor: "STABAXOL (registered trademark) I-LF", manufactured by Rhein Chemie Corp.
Amine type hardener: MOCA; "Cuamine MT", manufactured by Ihara Chemical Industry Co., Ltd.
Polyol type hardener: 1,4-butanediol.

### [Dimensional Change]

A decomposition liquid was prepared by mixing oleic acid, a copper powder, and table salt. In this decomposition liquid, the concentration of the table salt was 20% by weight and that of the copper powder was 6% by weight, based on the oleic acid. First, the decomposition liquid was heated at 80°C for 48 hours to dissolve and ionize copper, and the remaining copper powder was then removed. The molded polyurethane objects (toothed belts) obtained in the Examples and Comparative Examples were immersed at 80°C for 48 hours in the decomposition liquid from which the copper powder had been removed. Thereafter, the molded polyurethane objects were separated from the decomposition liquid and heat-treated at 80°C for 72 hours. After the heat treatment, each molded polyurethane object was examined for dimensional change (degree of oleic-acid absorption) and evaluated on the basis of the following criteria.

S: having a dimensional change (absolute value) less than 3%
A: having a dimensional change (absolute value) of 3% or higher and less than 5%
B: having a dimensional change (absolute value) of 5% or higher and less than 10%
C: having a dimensional change (absolute value) of 10% or higher

### [Decomposability]

A decomposition liquid was prepared by mixing oleic acid, a copper powder, and table salt. In this decomposition liquid, the concentration of the table salt was 20% by weight and that of the copper powder was 6% by weight, based on the oleic acid. First, the decomposition liquid was heated at 80°C for 48 hours to dissolve and ionize copper, and the remaining copper powder was then removed. The molded polyurethane objects (toothed belts) obtained in the Examples and Comparative Examples were immersed at 80°C for 48 hours in the decomposition liquid from which the copper powder had been removed. Thereafter, the molded polyurethane objects were separated from the decomposition liquid and heat-treated at 80°C for 72 hours. After the heat treatment, each molded polyurethane object was immersed in acetone at 75°C for 8 hours, and the acetone dissolution amount which had dissolved in the acetone (degree of deterioration (decomposition) of the polyurethane) was determined. The property was evaluated on the basis of the following criteria. The measured values of the amount of components extracted with the acetone in Examples 2 to 5 and Comparative Examples 1 to 3 are given in terms of value relative to the measured value of Example 1, which was taken as "1".

S: having an acetone dissolution amount (relative value) less than 0.5
A: having an acetone dissolution amount (relative value) of 0.5 or larger and less than 1.5
B: having an acetone dissolution amount (relative value) of 1.5 or larger and less than 3.0
C: having an acetone dissolution amount (relative value) of 3.0 or larger

### [Hydrolytic Resistance]

In order to evaluate the hydrolytic resistance, tensile test pieces were cut out of the molded polyurethane objects (toothed belts) obtained in the Examples and Comparative Examples. The tensile test pieces were allowed to stand for 35 days in an environment having a temperature of 70°C and a humidity of 95% and then compared in the retention of tensile strength. The retention of tensile strength is the proportion in percentage of the tensile strength after the 35-day standing to the initial tensile strength (without standing), which is taken as 100%. A measurement of tensile strength was made with Autograph ("AG-1", manufactured by Shimadzu Corp.) by stretching each tensile test piece in the longitudinal direction of the test piece (i.e., the direction corresponding to the width direction of the toothed belt) at a stretching speed of 50 mm/min. The tensile force measured at the time when the test piece was broken was taken as the tensile strength. Three tensile test pieces were used for each set of conditions, and the measurement was conducted three times under the same conditions. The measured values were averaged to evaluate the hydrolytic resistance in accordance with the following criteria.

S: having a strength retention of 98% or higher
A: having a strength retention of 80% or higher and less than 98%
B: having a strength retention of 60% or higher and less than 80%
C: having a strength retention less than 60%

### EXAMPLES 1 TO 5 AND COMPARATIVE EXAMPLES 1 TO 3

The urethane prepolymer, plasticizer, and hydrolysis inhibitor shown in Table 1 (in Comparative Example 1, the urethane prepolymer and plasticizer shown in Table 1) were mixed together at 60°C with stirring, and the mixture was defoamed. Thereafter, the hardener shown in Table 1 was added and mixed therewith at 115°C with stirring. Thus, thermosetting polyurethane compositions were prepared. Cords (polyester cords; diameter, 0.25 mm) were wound at intervals of 0.5 mm around an inner die having a peripheral surface where a plurality of grooves corresponding to a tooth form (S2M) extended along the axial direction, and this inner die was inserted into a cylindrical outer die. The mold assembly thus obtained was heated to 90 to 110°C. Thereafter, each thermosetting polyurethane composition obtained was packed into the mold and heated to 110 to 120°C while rotating the mold at about 4,000 rpm, thereby curing the thermosetting polyurethane composition to obtain a belt sleeve. The belt sleeve obtained was cut in round slices having a given width. Thus, toothed belts having a tooth width of 40 mm, a tooth pitch of 2.0 mm, and a circumference of 600 mm were obtained. The results of evaluation of the toothed belts obtained are shown in Table 1.

### [Table 1]

**Table 1**

| | | Example | | | | | Comparative Example | | |
|---|---|---|---|---|---|---|---|---|---|
| | | 1 | 2 | 3 | 4 | 5 | 1 | 2 | 3 |
| Composition (parts by mass) | Polyester type prepolymer A | 100 | - | - | - | - | - | - | 100 |
| | Polyester type prepolymer B | - | 100 | - | - | - | - | - | - |
| | Polyester type prepolymer C | - | - | 100 | - | - | - | - | - |
| | Polyester type prepolymer D | - | - | - | 100 | - | - | - | - |
| | Polycarbonate type prepolymer E | - | - | - | - | 100 | - | - | - |
| | Polyether type prepolymer F | - | - | - | - | - | 100 | 100 | - |
| | Plasticizer | 40 | 10 | 10 | 10 | 10 | 20 | 20 | 40 |
| | Hydrolysis inhibitor | 2 | 2 | 2 | 2 | 2 | - | 2 | - |
| | Amine type hardener | 16.0 | 14.6 | 14.0 | - | - | 12.0 | 12.0 | 16.0 |
| | Polyol type hardener | - | - | - | 3.8 | 3.7 | - | - | - |
| Dimensional change (%) | Measured value | -6.5 | 7.9 | 8.4 | 3.5 | 1.3 | 14.6 | 14.8 | -6.6 |
| +: increase | | | | | | | | | |
| -: decrease | Evaluation | B | B | B | A | S | C | C | B |
| Decomposability | Acetone dissolution amount (relative value) | 1.0 | 1.3 | 0.3 | 0.7 | 0.2 | 8.0 | 8.0 | 1.0 |
| | Evaluation | A | A | S | A | S | C | C | A |
| Hydrolytic resistance | | B | B | A | A | S | A | A | C |

As apparent from the results concerning dimensional change given in Table 1, Examples 1 to 5 showed smaller dimensional increases than Comparative Examples 1 and 2 (polyether type polyurethanes) and were inhibited from absorbing oleic acid. The results concerning decomposability (acetone dissolution amount) show that Examples 1 to 5 had smaller dissolution amounts than Comparative Examples 1 and 2 and the molded polyurethane objects were inhibited from deteriorating.

As apparent from the results concerning hydrolytic resistance, Examples 3 to 5, for which polycaprolactone-based and polycarbonate-based polyols had been used, were able to retain hydrolytic resistance as well, whereas Examples 1 and 2, for which adipate-based polyols had been used, showed lower hydrolytic resistance than Examples 3 to 5 despite the inclusion of a hydrolysis inhibitor therein. Comparative Example 3, which had had the same composition as Example 1 except for omission of the hydrolysis inhibitor, showed insufficient hydrolytic resistance.

It was ascertained from these results that in cases when the thermosetting polyurethane compositions of Examples 1 to 5 according to the present invention are used, it is possible to obtain molded polyurethane objects which are inhibited from deteriorating even in an environment where the molded objects come into contact with an oil including an unsaturated fatty acid and with a metal, e.g., a metal powder. It was also ascertained that in the case where a high degree of hydrolytic resistance is also required, the thermosetting polyurethane compositions of Examples 3 to 5, in particular, are the most practicable compositions which produce a remarkable effect.

While the invention has been described in detail and with reference to specific embodiments thereof, it will be apparent to one skilled in the art that various changes and modifications can be made therein without departing from the spirit and scope thereof.

This application is based on a Japanese patent application No. 2016-149891 filed on July 29, 2016 and a Japanese patent application No. 2017-143475 filed on July 25, 2017, the contents thereof being incorporated herein by reference.

### Industrial Applicability

The thermosetting polyurethane composition of the present invention can be used as a raw material for molded objects to be used in an environment where the molded objects come into contact with an oil including an unsaturated fatty acid and with a metal, e.g., a metal powder. Examples of the molded object include industrial components or OA appliance components, e.g., rolls, and ones in coin-conveying devices, etc. Preferred are coin-conveying belts (e.g., the coin-conveying belts of automatic change makers utilized in cash registers in the restaurant industry).

### Description of the Reference Numerals

1 Belt body
2 Tooth
3 Cord

## Claims

1. A thermosetting polyurethane composition for forming a belt to be used in an environment where the belt comes into contact with an oil including an unsaturated fatty acid and with a metal, the thermosetting polyurethane composition comprising an isocyanate-group-terminated urethane prepolymer (A) having a polyester unit and/or a polycarbonate unit, a hydrolysis inhibitor (B), and a hardener (C).

2. The thermosetting polyurethane composition according to Claim 1, wherein the isocyanate-group-terminated urethane prepolymer (A) is a reaction product obtained by reacting a lactone-based polyester polyol and/or a polycarbonate polyol with an aromatic polyisocyanate.

3. The thermosetting polyurethane composition according to Claim 1, wherein the isocyanate-group-terminated urethane prepolymer (A) is a reaction product obtained by reacting a polycarbonate polyol with p-phenylene diisocyanate.

4. The thermosetting polyurethane composition according to any one of Claims 1 to 3, wherein the hydrolysis inhibitor (B) is a carbodiimide compound.

5. The thermosetting polyurethane composition according to any one of Claims 1 to 4, wherein a proportion of the hydrolysis inhibitor (B) is 0.1 to 10 parts by mass per 100 parts by mass of the isocyanate-group-terminated urethane prepolymer (A).

6. The thermosetting polyurethane composition according to any one of Claims 1 to 5, wherein the hardener (C) is an alkanediol.

7. A molded object which has a surface that comes into contact with an oil including an unsaturated fatty acid and with a metal, wherein a part or all of the surface is constituted of a cured object obtained from the thermosetting polyurethane composition according to any one of Claims 1 to 6.

8. The molded object according to Claim 7 which is a toothed belt for conveying coins.

9. A method of using the toothed belt for conveying coins according to Claim 8, wherein the toothed belt is used in an environment where the toothed belt comes into contact with an oil including an unsaturated fatty acid and with a metal.
